Europäisches Patentamt

European Patent Office

Office européen des brevets

(11) EP 1 129 944 A1

(12) **EUROPÄISCHE PATENTANMELDUNG**

(43) Veröffentlichungstag:
 05.09.2001 Patentblatt 2001/36

(51) Int Cl.[7]: **B64G 1/64**, G01B 21/24,
 G01S 5/16, B25J 18/00

(21) Anmeldenummer: 01104452.6

(22) Anmeldetag: 28.02.2001

(84) Benannte Vertragsstaaten:
 **AT BE CH CY DE DK ES FI FR GB GR IE IT LI LU
 MC NL PT SE TR**
 Benannte Erstreckungsstaaten:
 **AL LT LV MK RO SI**

(30) Priorität: 03.03.2000 DE 10011890

(71) Anmelder: **Jena-Optronik GmbH**
 **07745 Jena (DE)**

(72) Erfinder:
 • **Strietzel, Roland**
 **01217 Dresden (DE)**
 • **Kolk, Karl-Hermann**
 **07751 Grosspürschütz (DE)**

(74) Vertreter: **Freitag, Joachim (DE) et al
 Patentanwälte Oehmke & Kollegen
 Neugasse 13
 07743 Jena (DE)**

(54) **Zustandsgrössen eines sich bewegenden Körpers ( Docking, Rendezvous ) mit drei Retroreflektoren und Zustandsbeobachter ( Luenberger )**

(57) Die Erfindung betrifft ein Verfahren zur Bestimmung der Zustandsgrößen eines sich bewegenden starren Körpers im Raum, insbesondere zur Ermittlung der Position und Lage eines Raumschiffes bei einem Annäherungs- und Dockingmanöver.

Die Aufgabe, eine neue Möglichkeit zur Bestimmung der Zustandsgrößen eines bewegten starren Körpers zu finden, die eine Vereinfachung mit sich bringt und eine höhere Zuverlässigkeit der Berechnung der Zustandsgrößen sichert, wird bei einem Verfahren zur Bestimmung der Zustandsgrößen eines sich bewegenden starren Körpers erfindungsgemäß gelöst, indem die Zustandsgrößen des bewegten Körpers mit einem Zustandsbeobachter (2) bestimmt werden, wobei Messdaten von Abtastungen mehrerer Retroreflektoren im Raum durch ein internes Speichermodell zum gewünschten Ausgangssignal der Zustandsgrößen des bewegten Körpers verarbeitet, wobei ausgehend von gesetzten Anfangswerten und in Operatoren implementierten bekannten Systemparametern ein aktueller Zustandsvektor des bewegten Körpers als Schätzung berechnet und mittels einer Korrektur mit jedem Messzyklus dem tatsächlichen Lage- und Bewegungsverhalten des Körpers angepasst wird, so dass nach einer bestimmten Anzahl von Mess- und Berechnungszyklen die Schätzwerte den tatsächlichen Bewegungsdaten des Körpers im Raum folgen und als Zustandgrößen des Körpers verwendet werden.

Fig. 2

EP 1 129 944 A1

**Beschreibung**

Die Erfindung betrifft ein Verfahren zur Bestimmung der Zustandsgrößen eines sich bewegenden starren Körpers im Raum, insbesondere zur Ermittlung der Position und Lage eines Raumschiffes bei einem Annäherungs- und Dockingmanöver.

In der Raumfahrt und in der Robotertechnik ist es oft erforderlich, Position und Lage von zwei Körpern zueinander zu bestimmen. Besondere Bedeutung hat das in der Raumfahrt beim Ankoppeln von Raumschiffen. So sind für die Steuerung des Andockvorganges mindestens sechs Größen erforderlich:

a) der Abstand (in drei Koordinaten x, y, z) und
b) die drei Eulerwinkel (Rollwinkel, Nickwinkel, Gierwinkel- wie beim Flugzeug), die auf möglichst einfache Weise bestimmt werden müssen.

Die einfachste Methode, den Abstand und die Blickrichtung von einem Körper zu einem anderen zu bestimmen, liefert die Radartechnik. Dabei haben sich für den Nahbereich, von einigen hundert Metern bis zu einigen Dezimetern, in letzter Zeit zunehmend Laser-Radar-Geräte durchgesetzt. Die kurze Wellenlänge des Lichtes ermöglicht hohe Genauigkeiten der zu messenden Größen Entfernung, Azimut und Elevation (in Kugelkoordinaten) oder der Komponenten in kartesischen Koordinaten. Das Radargerät sendet einen Sendestrahl aus, der das Feld, in dem das Zielobjekt (auch: Target, z.B. Raumstation, Raumschiff) erwartet wird, abtastet und vom Zielobjekt reflektiert wird. Die Reflexion und damit die Zuverlässigkeit der Messung kann wesentlich verbessert werden, wenn man sogenannte Retroreflektoren verwendet, die den einfallenden Strahl exakt in die entgegengesetzte Richtung zurückwerfen.

Der Messstrahl verlässt die Senderoptik und wird durch eine koordinierte Bewegung von Azimut- und Elevationsspiegeln zeilenweise über das Beobachtungsfeld geführt. Wenn der Messstrahl einen Retroreflektor trifft, wird er in die entgegengesetzte Richtung zurückgeworfen und erreicht so die Empfängeroptik des Radargerätes. In diesem Moment werden die Messdaten ermittelt, indem die Spiegelstellungen bestimmt werden und aus der Laufzeit des Strahls vom Sender zum Empfänger die Entfernung errechnet wird.

Wenn man nicht nur die Position des Targets, sondern auch seine Lage bestimmen will, muss man mindestens drei Retroreflektoren verwenden, die im Koordinatensystem des Targets definiert angeordnet sind. Mit einer solchen Anordnung aus einem aktiven Entfernungsmesser (z.B. Radargerät, Rendezvous-Sensor) und drei Retroreflektoren, wie sie z.B. von Möbius, B. u.a. (in: Development and Application of a Rendezvous and Docking Sensor "RVS", International Conference on Space Optics, Toulouse, 1997) vorgeschlagen wurde, kann man eindeutig die Position und die Lage des Targets in Bezug auf das Koordinatensystem des Messgerätes bestimmen. Dazu werden die Retroreflektoren gleichzeitig oder zeitlich nacheinander angepeilt, um jeweils Entfernung, Azimut und Elevation zu messen. Das bedeutet, dass sich auf diese Weise Position (z.B. ausgedrückt durch kartesische Koordinaten x, y, z) und Lage (z. B. durch Angabe von Eulerwinkeln) der beiden Koordinatensysteme zueinander bestimmen lassen. Wenn der aktive Sensorhäufig auch Rendezvous-Sensor (RVS) genannt - und die Retroreflektoranordnung (als Systemkomponenten des Messprozesses) fest sind, sich also nicht bewegen, kann man durch geometrische Beziehungen aus den neun Messwerten, die insgesamt sechs Parameter für Position und Lage der beiden Koordinatensysteme zueinander bestimmen.

Im Falle der Bewegung mindestens einer der zwei Systemkomponenten (z.B. bei Annäherung und Andocken zweier Raumschiffe) entsteht ein Problem bei der Auswertung der Messwerte dadurch, dass sich während der Messungen an den drei Retroreflektoren des vom RVS abgetasteten Körpers sowohl die relative Position als auch die Lage verändern und die Messergebnisse sich nicht mehr ganz einfach zuordnen lassen. So wurden bisher zur Bestimmung von Position und Lage Näherungslösungen auf der Grundlage von Dreiecksbeziehungen benutzt, die Schätzwerte der Geschwindigkeiten berücksichtigen.

Ein weiterer Nachteil dieser Lösung, ist die umfangreiche Verwendung von Winkelfunktionen, die in Bordrechnern nur aufwendig zu implementieren sind und Mehrdeutigkeiten hervorrufen können.

Der Erfindung liegt die Aufgabe zugrunde, eine neue Möglichkeit zur Bestimmung der Zustandsgrößen eines sich bewegenden starren Körpers zu finden, die eine Vereinfachung mit sich bringt und eine höhere Zuverlässigkeit der Berechnung der Zustandsgrößen des bewegten Körpers sichert. Es ist eine erweiterte Aufgabe der Erfindung, die vorgenannten Ziele auch bei serieller Messwertaufnahme zu gewährleisten, ohne den Auswerteaufwand zu erhöhen.

Erfindungsgemäß wird die Aufgabe bei einem Verfahren zur Bestimmung der Zustandsgrößen eines sich bewegenden starren Körpers, wie relativer Position und Lage sowie translatorischer und rotatorischer Geschwindigkeiten, insbesondere für eine Bewegung der Annäherung an einen anderen Körper unter Verwendung von durch einen aktiven Sensor bereitgestellten Messdaten, wobei die Messdaten von mindestens drei Retroreflektoren, deren Konfiguration der Anbringung am anderen Körper bekannt und einem körpereigenen Koordinatensystem des anderen Körpers definiert zugeordnet ist, erhalten werden, dadurch gelöst, dass die Bestimmung der Zustandsgrößen des bewegten Körpers mit einem Zustandsbeobachter geschieht, der die Messdaten von Abtastungen der einzelnen Retroreflektoren im Raum durch ein internes Speichermodell zum gewünschten Ausgangssignal der Zustandsgrößen des bewegten Körpers verarbeitet, wobei ausgehend von gesetzten Anfangswerten und in Operatoren implementierten bekannten Systemparametern ein aktueller Zustandsvektor des bewegten Körpers als Schätzung berechnet wird und mittels einer durch Verknüpfung mit den Messdaten ermittelten Korrektur diese Schätzung mit jedem Messzyklus dem tatsächlichen Lage- und Bewegungsverhalten des Körpers angepasst wird, so dass nach einer bestimmten Anzahl von Mess- und Berechnungszyklen die im Zustandsbeobachter berechneten Schätzwerte in sehr guter Näherung den aktuellen Bewegungsdaten des Körpers im Raum folgen und die berechneten Schätzwerte als Zustandgrößen des Körpers verwendet werden.

Vorteilhaft werden die Messdaten mit den im Zustandsbeobachter vorliegenden Schätzwerten verglichen, wobei eine Differenz aus einem Messvektor y(k) und einer aktuellen Schätzung y*(k) des Messvektors auf der Grundlage eines geschätzten Zustandsvektors x*(k), wobei k ein Zählindex der laufenden Mess- und Berechnungstakte ist, ermittelt und zur Korrektur der Schätzwerte verwendet wird. Es erweist sich als zweckmäßig, dass aus dem aktuell geschätzten Zustandsvektor x*(k) mittels einer Ausgangsmatrix, die die Wirkung des realen Zustandsvektors x(k) auf den Messvektor y(k) beinhaltet, ein geschätzter Messvektor y*(k) zur Bereitstellung einer geschätzten Vergleichsgröße erzeugt wird, aus dem aktuell geschätzten Zustandsvektor x*(k) über eine Systemmatrix, die Einflüsse des Systems beim Übergang von einem aktuellen Zustand auf einen nächsten Zustand berücksichtigt, ein Folgezustand des Zustandsvektors x*(k) berechnet wird, und dieser Folgezustand mittels der Differenz unter Verwendung einer Rückführmatrix, die eine Vorschrift zur Umsetzung der Differenz in eine Korrektur des aktuellen Zustands beinhaltet, korrigiert wird und nach dieser Korrektur einen Folgezustandsvektors x*(k+1) ergibt, der für den nächsten Takt in den aktuellen Zustandsvektor x*(k) übernommen wird. Dabei ist besonders vorteilhaft, wenn der Zustandsbeobachter als Filter aufgebaut wird, wobei aus einer Verknüpfung der Ausgangsmatrix und der Rückführmatrix mit der Systemmatrix ein Operator zur Erzeugung eines Folgezustands, der den Zusammenhang zwischen den Messvektoren und zwei aufeinanderfolgenden geschätzten Zustandsvektoren x*(k) und x*(k+1) ohne Kenntnis eines geschätzten Messvektors beschreibt, erzeugt wird, aus dem aktuellen geschätzten Zustandsvektor x*(k) dessen Folgezustand mittels des besagten Operators berechnet wird, der erzeugte Folgezustand des Zustandsvektors mit dem über die Rückführmatrix umgewandelten Messvektor korrigiert und in den Folgezustandsvektor x*(k+1) überführt wird und der Folgezustandsvektor x*(k+1) parallel zum noch vorhandenen aktuellen Zustandsvektor x*(k) wahlweise als Ausgang des Zustandsbeobachters bereitgestellt wird.

Eine besonders einfache Variante der Erfindung besteht darin, die Messdaten von mehreren zeitgleich abgetasteten Retroreflektoren in Form von Messvektoren im Zustandsbeobachter gleichzeitig mit der Messtaktfrequenz der Retroreflektorabtastungen zu verarbeiten, wobei ein Zyklustakt der Berechnungen im Zustandsbeobachter dem Messtakt der Abtastung der Retroreflektoren entspricht.

Eine andere wegen Gewicht- und Volumenersparnis vorteilhafte Ausgestaltung des erfindungsgemäßen Verfahrens geht davon aus, dass die Messdaten in Form von Messvektoren von mehreren nacheinander abgetasteten Retroreflektoren im Zustandsbeobachter mit einer Zyklustaktfrequenz, deren Periode der Dauer einer Serie von Abtastungen aller Retroreflektoren mit einer Messtaktfrequenz entspricht, verarbeitet werden, wobei die Messtaktfrequenz ein ganzzahliges Vielfaches der Zyklustaktfrequenz in Abhängigkeit von der Anzahl der verwendeten Retroreflektoren ist. Bei dieser Variante werden vorteilhaft die Messvektoren von den aufeinanderfolgend abgetasteten Retroreflektoren im Zustandsbeobachter zwischengespeichert, in Abhängigkeit ihrer zeitlichen Reihenfolge gewichtet und nach Abschluss einer Serie von Abtastungen aller Retroreflektoren in einem Zyklustakt gleichzeitig verarbeitet werden.

Dazu werden vorteilhaft die zeitlich nacheinander einlaufenden Messvektoren $y_i$ in einem als Filter aufgebauten Zustandsbeobachter zwischengespeichert, in Abhängigkeit vom Messzeitpunkt durch jeweils eine zugehörige Rückführmatrix und eine Bewertungsmatrix, die eine vom Alter der einzelnen Messvektoren $y_i$ zeitabhängige Vergessensrate berücksichtigt, unterschiedlich bewertet (gewichtet) und die speziell bewerteten und anschließend zusammengefassten Messvektoren $y_i$ zur Korrektur des aktuellen Zustandsvektors x*(k), der zuvor mit einer Matrix multipliziert wurde, die das Gedächtnis über n Messtakte verkörpert, verwendet.

In einer besonders bevorzugten Variante der Erfindung verarbeitet man die Messdaten in Form von Messvektoren von aufeinanderfolgend abgetasteten Retroreflektoren im Zustandsbeobachter mit einer Abtastfrequenz, die der mittleren Dauer der Abtastungen jedes der Retroreflektoren entspricht, unter kurzzeitiger Zwischenspeicherung in Quasi-Echtzeit. Dabei werden die Messvektoren, die jeweils in einer definierten Reihenfolge der abgetasteten Retroreflektoren aufgenommen werden, ohne Verzug verarbeitet, wobei vorteilhaft jeweils ein einzelner Messvektor $y_i(k)$ mit einer Rückführmatrix, die zugehörig zu einer für jeden Retroreflektor spezifischen Ausgangsmatrix angepasst ist, im Zustandsbeobachter bewertet wird, und jeweils aus dem bewerteten Messvektor $y_i(k)$ und dem vorliegenden aktuellen Zustandsvektor x*(k), der mit einer das Gedächtnis über einen Messtakt repräsentierenden Matrix multipliziert wird, ein Folgezustand berechnet wird, der sogleich Ausgangszustand für die Verarbeitung des nächsten Messvektors $y_{i+1}(k+i\Delta)$ vom nachfolgend abgetasteten Retroreflektor ist. In dieser vorteilhaften Variante steht nach jedem Messtakt der geschätzte Zustandsvektor $x^*(k)$ zur Verfügung.

Die Grundidee des erfindungsgemäßen Verfahrens baut auf der vorausgesetzten Bereitstellung von Messwerten aus einer raumabtastende Entfernungsmesseinrichtung (z.B. Laserradar) des sich bewegenden Körpers und der Kenntnis einer Konfiguration von Messpunkten (Retroreflektoren) auf dem anderen Körper (Target) auf.

Das Wesen besteht in der Ermittlung der sich ständig ändernden Position und Lage zwischen aktivem Sensor und Target anhand der aktuell abgetasteten Targetmesspunkte, indem die Bewegung von Messeinrichtung und Target mittels einer Verarbeitung der aktuellen Messwerte simuliert wird. Hierbei werden aufeinanderfolgende Messungen während der Annäherung in einem sogenannten Zustandsbeobachter so verknüpft, dass ausgehend von geeignet gewählten Anfangswerten folgende Zustandsgrößen als Schätzwerte unmittelbar nach jeder einzelnen Messung der Retroreflektoren berechnet werden:

- die relative Position in kartesischen Koordinaten, d.h. ein Positionsvektor p zwischen den Koordinatensystemen des aktiven Sensors und des Targets, (3 Größen),
- die Geschwindigkeitskomponenten in den drei Koordinatenrichtungen (3 Größen)
- die Quaternionen zur Lagebeschreibung (3 unabhängige $q_1$, $q_2$, $q_3$, und eine abhängige Größe $q_4$), die anstelle von Eulerwinkeln die Lage eines Körpers in Bezug auf ein festgelegtes Inertialsystem beschreiben, und
- die Winkelgeschwindigkeiten um die Koordinatenachsen (3 Größen).

Bei diesem Verfahren werden demnach 12 Zustandsgrößen des bewegten Körpers geschätzt und mittels eines Vergleichs mit den Messdaten der Abtastung der Retroreflektoren ständig korrigiert und aktualisiert.

Mit dem erfindungsgemäßen Verfahren ist es möglich, die Zustandsgrößen eines sich bewegenden starren Körpers zu bestimmen, wobei diese Art der Bestimmung eine Vereinfachung und höhere Zuverlässigkeit der Berechnung der Zustandsgrößen des bewegten Körpers darstellt. Des weiteren kommt das erfindungsgemäße Verfahren, auch bei serieller Messwertaufnahme ohne eine Erhöhung des Auswerteaufwandes aus.

Die Erfindung soll nachstehend anhand von Ausführungsbeispielen näher erläutert werden. Die Zeichnungen zeigen:

Fig. 1: den Zusammenhang zwischen Messvektor $r_1$, Targetvektor $t_1$ und Positionsvektor p,

Fig. 2: ein erfindungsgemäßes Messprinzip aus Regelstrecke 1 und Zustandsbeobachter 2,

Fig. 3: eine Betrachtung des Zustandsbeobachters 2 als Filter,

Fig. 4: einen Zustandsbeobachter 2 für aufeinanderfolgende Messungen an drei Retroreflektoren Ri eines Targets und gleichzeitige Auswertung am Ende eines Zyklus von Messungen aller Retroreflektoren Ri,

Fig. 5: einen Zustandsbeobachter 2 aus drei Teilbeobachtern für die sukzessive Verarbeitung der Messergebnisse innerhalb eines Messzyklus,

Fig. 6: das Einschwingverhalten des Zustandsbeobachters,

Fig. 7: das Folgeverhalten des Zustandsbeobachters, dargestellt am Beispiel von zwei Quaternionen.

Zur Erläuterung des erfindungsgemäßen Verfahrens sollen folgende Randbedingungen als gegeben angenommen werden, um die Beschreibung zu erleichtern.

Für die Funktion des erfindungsgemäßen Verfahrens ist es gleichgültig, ob sich der Körper mit dem aktiven Sensor bewegt oder der andere Körper (im weiteren Target genannt) mit den Retroreflektoren. Hier wird zweckmäßigerweise angenommen, dass ein aktiver Rendezvous-Sensor auf einem bewegten Raumschiff montiert ist und das Target (z. B. eine Raumstation oder ein anderes Raumschiff) "feststeht", d.h. eine Bewegung des Targets ist für die relative Annäherung des Raumschiffes ohne Bedeutung. Auf diese Weise können die ermittelten Zustandsgrößen des Raumschiffs als Ergebnisse des erfindungsgemäßen Verfahrens direkt zur Steuerung des bewegten Raumschiffs verwendet werden. Nachfolgend wird der aktive Rendezvous-Sensor - ohne Beschränkung der Allgemeinheit - vereinfacht als Laserradar bezeichnet, da ein solches bevorzugt Verwendung findet. Weiterhin wird zur Vereinfachung der Erläuterungen die Anzahl der Retroreflektoren mit drei angenommen, da diese in der Regel ausreicht, um eine Fläche im Raum (z.B. die Andockfläche des anderen Körpers) exakt in Position (Entfernung) und Lage zu definieren, wenn die Verteilung der Retroreflektoren geeignet gewählt und in ihrer Konfiguration bekannt ist.

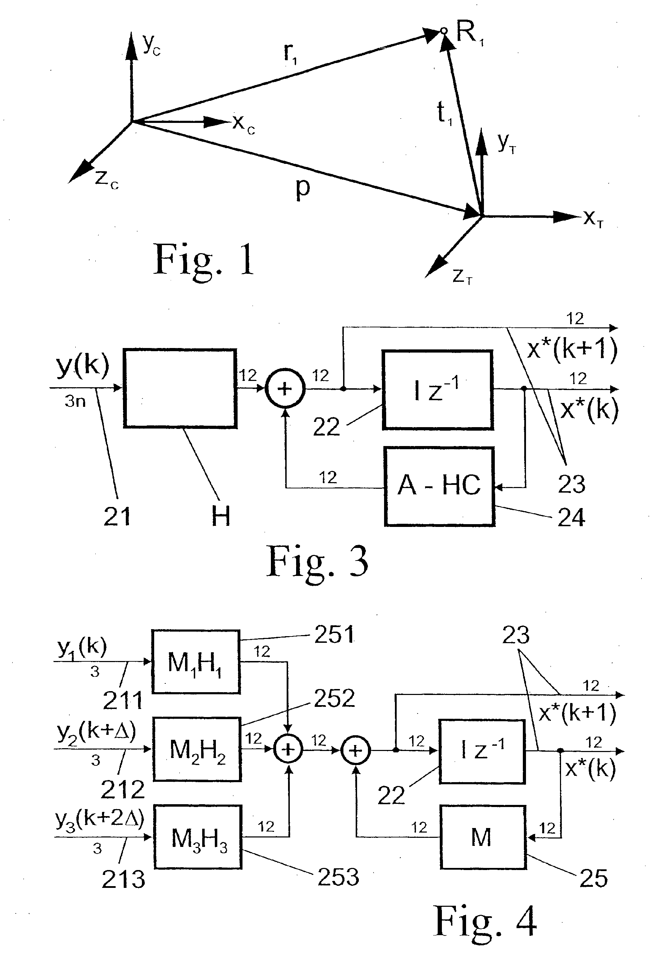

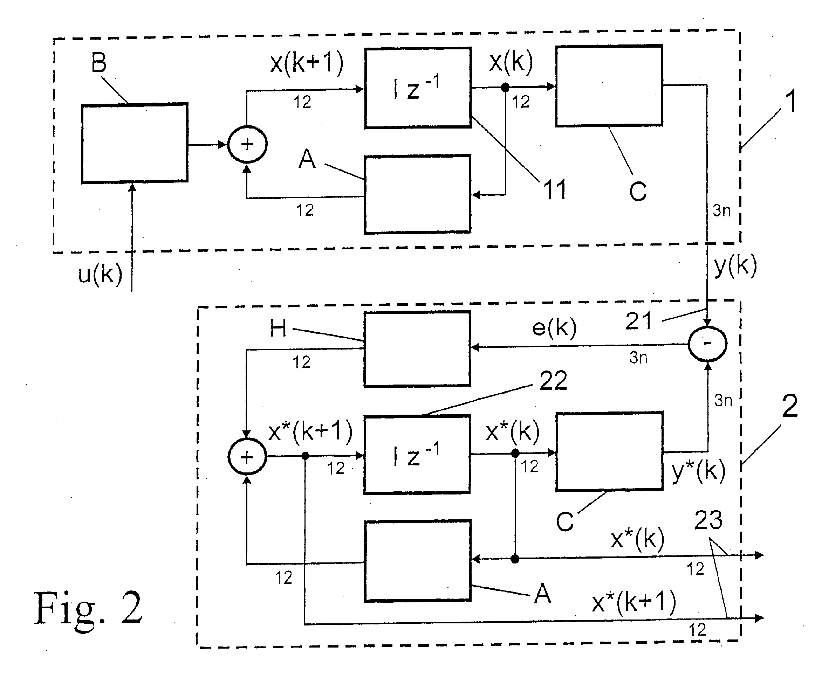

Fig. 1 veranschaulicht den Zusammenhang zwischen den Messdaten, Zustandsgrößen und den unterschiedlichen Koordinatensystemen des bewegten Körpers und des Targets, an das die Annäherung (und ggf. das Andocken) erfolgen soll. Dabei stellt ein Messvektor $r_1$ die eigentliche Messgröße der Entfernung bis zu einem ersten Retroreflektor $R_1$ dar. Der Messvektor $r_1$ gibt im Koordinatensystem ($x_C$, $y_C$, $z_C$) des Laserradars an, wo sich der Retroreflektor $R_1$ befindet. Ebenfalls im Koordinatensystem ($x_C$, $y_C$, $z_C$) des Laserradars wird ein Positionsvektor p angegeben, der zum Ursprung eines Koordinatensystems ($x_T$, $y_T$, $z_T$) des Targets zeigt. Im Koordinatensystem ($x_T$, $y_T$, $z_T$) des Targets werden Targetvektoren $t_i$ angegeben, die von dessen Koordinatenursprung zu den Retroreflektoren $R_i$ zeigen. Zur Vereinfachung ist in Fig. 1 nur der Targetvektor $t_1$ zum Retroreflektor $R_1$ dargestellt. Mit einer entsprechenden Zuordnung weiterer Targetvektoren $t_i$ ist die Anordnung der Retroreflektoren $R_i$ im Koordinatensystem ($x_T$, $y_T$, $z_T$) festgelegt. Wenn sich die beiden oben genannten Koordinatensysteme durch einfache Translation ineinander überführen lassen, dann gilt für den zum Retroreflektor $R_1$ zeigenden Messvektor $r_1$ in der Vektordarstellung gemäß Fig. 1 die einfache Beziehung

$$r_1 = p + t_1. \tag{1}$$

Wenn die beiden Koordinatensysteme gegeneinander verdreht sind, dann muss eine Lagematrix Q einbezogen werden. Sie gibt an, wie der Targetvektor $t_1$, der im Koordinatensystem ($x_T$, $y_T$, $z_T$) des Targets angegeben ist, im Koordinatensystem ($x_C$, $y_C$, $z_C$) des Laserradars erscheint. Damit erhält man

$$r_1 = p + Q\, t_1. \tag{2}$$

Gleichung (2) zeigt, wie die Zustandsgrößen der Position mit p(x, y, z) und der Lage mit Q ($q_1$, $q_2$, $q_3$, $q_4$) in das Messergebnis eingehen. Dabei sind $q_1$, $q_2$, $q_3$, $q_4$ Quaternionen, die anstelle der Eulerwinkel die Lage eines Körpers in Bezug auf ein festgelegtes Koordinatensystem beschreiben können. Quaternionen stellen neben den Eulerwinkeln eine gleichwertige Möglichkeit dar, die Lage eines Körpers mit körpereigenem Koordinatensystem in Bezug auf ein anderes Koordinatensystem darzustellen. Sie haben den Vorteil, dass mit ihrer Hilfe die Lagematrix Q in Gleichung (2) ohne Winkelfunktionen darstellbar ist. Der Einfluss der zugehörigen Geschwindigkeiten ist durch die zeitliche Abhängigkeit gegeben und wird durch wiederholte Messung der Retroreflektoren $R_i$ erfasst. Aus Gleichung (2) geht hervor, dass von den zwölf zu ermittelnde Zustandsgrößen nur sechs Zustandsgrößen (x, y, z, $q_1$, $q_2$, $q_3$) die 3 Komponenten des einzelnen Messvektors $r_1$ bestimmen. Deshalb muss eine bestimmte Anzahl von Messungen gleichzeitig und zeitlich nacheinander an unterschiedlichen und gleichen Retroreflektoren $R_i$ durchgeführt werden, um das Informationsdefizit von nur einer Messung auszugleichen.

Weitere Gleichungen analog zu Gleichung (2) lassen sich sinngemäß für die anderen Retroreflektoren $R_i$ aufstellen.

Das erfindungsgemäße Verfahren zur Bestimmung der genannten Zustandsgrößen, wie in Fig. 2 dargestellt, lehnt sich an ein Prinzip der Regelungstechnik (Beobachter von Luenberger [Föllinger, O.: Regelungstechnik, Hüthig Buch Verlag, Heidelberg, 1990, S. 501-517]) an.

Der obere Teil von Fig. 2 kann im Sinne der Regelungstechnik als eine Regelstrecke 1 (Raumschiff mit Laserradargerät) aufgefasst werden. Zu dieser gehören ein Eingangsvektor u, eine Eingangsmatrix B, eine Systemmatrix A, ein Zustandsvektor x, eine Ausgangsmatrix C und ein Ausgangsvektor y.

Der Eingangsvektor u, in dem die Antriebssignale und mögliche Störsignale zusammengefasst sind, bestimmt den Zustandsvektor x des sich bewegenden Raumschiffes über die Eingangsmatrix B. Man erkennt, dass der neue Zustand zum Zeitpunkt (k+1) aus dem aktuellen Zustand x (k), bewertet mit der Systemmatrix A, und aus dem aktuellen Eingangsvektor x, der mit der Eingangsmatrix B multipliziert wird, entsteht. Ein nachfolgendes Übertragungsglied 11 mit der Einheitsmatrix I symbolisiert durch die Operation I $z^{-1}$, dass der Folgezustand x(k+1) nach einem Abtasttakt in den aktuellen Zustandsvektor x(k) überführt wird. Im Ausgangsvektor y sind die Messergebnisse $r_1$, $r_2$, $r_3$ für die angenommenen drei Retroreflektoren $R_1$, $R_2$ und $R_3$ zusammengefasst, die auf der Grundlage der aktuellen Zustandsgrößen x(k) des sich bewegenden Raumschiffes messbar sind. Es ist zweckmäßig, die Messergebnisse Entfernung, Azimut und Elevation in kartesische Koordinaten umzurechnen.

Im unteren Teil von Fig. 2 befindet sich ein Modell des bewegten Körpers, ein sogenannter Zustandsbeobachter 2. Die Systemparameter, d.h. die Systemmatrix A und die Ausgangsmatrix C, von der Regelstrecke 1 des bewegten Körpers und vom Zustandsbeobachter 2 werden als gleich angenommen. Die spezielle Anpassung des Zustandsbeobachters 2 an das Messproblem der vorgegebenen Regelstrecke 1 besteht darin, dass ein Eingangsvektor u im Zustandsbeobachter 2 nicht verwendet wird, da er nicht zur Verfügung steht. Deshalb werden im Zustandsbeobachter 2 Schätzwerte y*(k) des Ausgangssignals erzeugt, die im Idealfall den Messergebnissen $r_1$, $r_2$, $r_3$ des Laserradars entsprechen. Da jedoch der Eingangsvektor u im Zustandsbeobachter 2 nicht verfügbar ist, wird der nächste Zustand aus einem aktuell geschätzten Zustandsvektor x*(k) und einer Korrektur e(k), die die Abweichung des realen Messvektors y(k) von dem im Zustandsbeobachter 2 geschätzten Messvektor y*(k) einbezieht, berechnet. In dieser Korrektur e(k) ist somit der Einfluss des Eingangsvektors u aus der Regelstrecke 1 mit enthalten.

Die Erzeugung des geschätzten Messvektors y*(k) erfolgt aus dem geschätzten Zustandsvektor x*(k) über eine Ausgangsmatrix C, die die Wirkung des realen Zustandsvektors x(k) auf den vom Laserradar gemessenen Messvektor y(k) beinhaltet. Die durch Differenzbildung des realen Messvektors y(k) mit dem geschätzten Messvektor y*(k) erhaltene Korrektur e(k) wird danach über eine Rückführmatrix H, die eine Vorschrift beinhaltet, in welchem Maße sich die Korrektur e(k) auf den geschätzten Zustandsvektor x*(k) auswirkt, auf den aktuellen geschätzten Zustandsvektor x*(k) angewendet, womit sich nächste geschätzte Zustand, ein Folgezustandsvektor x*(k+1), ergibt. Das nachfolgende Übertragungsglied 22 symbolisiert, wie schon in der Regelstrecke 1 mit 1 $z^{-1}$, dass nach einem Takt der Folgezustandsvektor x*(k+1) in den aktuellen geschätzten Zustandsvektor x*(k) überführt wird.

Stimmt der Zustandsvektor x(k) der Regelstrecke 1 (Raumschiff) mit dem geschätzten Zustandsvektor x*(k) des Zustandsbeobachters 2 (Rechenmodell des Raumschiffs) überein, d.h. x(k) = x*(k), dann stimmen auch der reale Messvektor y(k) und der vom Zustandsbeobachter 2 geschätzte Messvektor y*(k) überein. Die Zustandsgrößen des bewegten Raumschiffes lassen sich dann direkt am Ausgang des Zustandsbeobachters 2 ablesen.

Wenn diese Übereinstimmung nicht gegeben ist, wird mit Hilfe eines Korrekturvektors e(k) unter Verwendung der bereits oben erwähnten Rückführmatrix H der Zustandsvektor x*(k) des Zustandsbeobachters 2 so lange korrigiert, bis der Fehler, d.h. die Abweichung zwischen x(k) und x*(k), verschwindet. Dies geschieht auf Basis weiterer Abtastungen der Retroreflektoren $R_1$ bis $R_3$, so dass die tatsächlichen Positions- und Lageänderungen des bewegten Körpers (Regelstrecke 1) stets direkt mit einfließen. Auf diese Weise können die Zustandsgrößen des sich nähernden Körpers bereits nach wenigen Abtast- und Berechnungszyklen direkt am Ausgang des Zustandsbeobachters 2 abgelesen werden.

Bei der Nutzung der Daten aus dem Zustandsbeobachter 2 besteht in jedem Fall auch die Option zu entscheiden, ob man von den Zuständen zweier aufeinanderfolgender Takte den geschätzten bzw. berechneten Zustandsvektor x*(k) oder dessen Folgezustandsvektor x*(k+1), als den am besten angenäherten Zustand verwendet.

Wenn man auf die Darstellung der Regelstrecke 1 aus Fig. 2 verzichtet, erhält man ein in Fig. 3 dargestelltes vereinfachtes Blockschema, das den Zusammenhang zwischen den realen Messvektoren y(k) (Eingang 21 des Zustandsbeobachters 2) und den geschätzten Zustandsvektoren x*(k) bzw. x*(k+1) (Ausgang 23 des Zustandsbeobachters 2) angibt.

Die dargestellte Struktur gemäß Fig. 3 entspricht der eines digitalen Filters. Die Eingangsgrößen dieses Filters sind die gemessenen Werte des Laserradars $r_1$, $r_2$, $r_3$, die als realer Messvektor y(k) zusammengefasst sind, und die gesuchten Zustandsvektoren x*(k) bzw. x*(k+1) stellen die Ausgangsgrößen des als Filter aufgebauten Zustandsbeobachters dar.

Fig. 3 lässt erkennen, wie sich der (neue) Folgezustandsvektor x*(k+1) aus dem aktuellen Zustandsvektor x*(k), multipliziert mit einem aus den bereits oben eingeführten Matrizen resultierenden Operator 24, dessen Rechenvorschrift mit der Matrizenoperation A - HC angegeben werden kann, und aus den gleichzeitig gegebenen Messergebnissen y(k), die mit der Rückführmatrix H gewichtet werden, ergibt.

Ein solches Filter ist dem Laserradargerät, das die Messwerte $r_i$ liefert, nachzuschalten, um durch Auswertung der zur Auswahl stehenden aufeinanderfolgenden Zustandsvektoren x*(k) und x*(k+1) die gesuchten Zustandsgrößen bestimmen zu können.

Zum Verständnis des Operators 24 und zur Erleichterung der darauf aufbauenden Erläuterungen der bevorzugten Ausführungsbeispiele der Erfindung sind in der folgenden Tabelle die verwendeten Matrizen und ihre Bedeutung noch einmal zusammengefasst.

| Matrix | Symbol | Bedeutung | Bemerkung |
|---|---|---|---|
| Systemmatrix | A (12x12) | beschreibt den Einfluß des aktuellen Zustandes x(k) auf den Folgezustand x(k+1) gemäß Gleichung (3) | bei relativ großen Eulerwinkein (>10°) ist x(k+1) = A x(k) durch eine Funktion x (k+1) = f[x(k)] zu ersetzen |
| Ausgangsmatrix | C (3nx12) | beschreibt die Wirkung des Zustandsvektors x auf den Messvektor y gemäß Gleichung (2), n ist Anzahl der Retroreflektoren $R_i$ | bei relativ großen Eulerwinkeln (>10°) ist y(k) = C x(k) durch die Funktion y(k) = g [x(k)] zu ersetzen |
| Rückführmatrix | H (12x3n) | beschreibt, wie das Fehlersignal zur Korrektur des Zustandsvektors im Zustandsbeobachter 2 benutzt wird, n ist die Anzahl der Retroreflektoren $R_i$ | bestimmt die Stabilität und die Konvergenzgeschwindigkeit des Zustandsbeobachters |

Das dynamische Verhalten des Zustandsbeobachters 2 gemäß Fig. 2 oder 3 lässt sich mit der Gleichung

$$x^*(k+1) = A\,x^*(k) - H\,C\,x^*(k) + H\,y(k) \tag{3}$$

ausdrücken.

Gleichung (3) ist gemäß Fig. 3 direkt anwendbar, wenn zum Beispiel mit drei Laserstrahlen die Positionen und Lagen der drei Retroreflektoren $R_1$, $R_2$ und $R_3$ gleichzeitig gemessen werden. In diesem Falle hat der Ausgangsvektor die Form $y = (r_1' \ r_2' \ r_3')'$, wobei das Apostroph jeweils den transponierten Vektor bedeutet.

Das ist normalerweise ein zu hoher technischer Aufwand. Aus diesem Grunde möchte man die Messung der drei (oder mehr) Retroreflektoren $R_i$ mit einem Laserradar zeitlich nacheinander ausführen.

Die Vorgehensweise nach Fig. 2 oder 3 kann für eine volumen- und gewichtsorientierte Lösung der erfindungsgemäßen Aufgabe nicht unmittelbar verwendet werden, da

- die Abtastung der Retroreflektoren $R_i$ (i = 1, 2,..., n; n $\geq$ 3) zeitlich nacheinander erfolgt und damit das zeitdiskrete System zwei Abtastfrequenzen besitzt, eine Messtaktfrequenz $f_P$ der seriellen Abtastung der Retroreflektoren $R_i$ und eine Zyklustaktfrequenz der Berechnung der Zustandsvektoren, die beide über die Zahl n der benutzten Retroreflektoren $R_i$ zusammenhängen, $f_P = n \ f_C$;
- sich die Retroreflektoren $R_i$ an unterschiedlichen Positionen befinden und damit die Ausgangsmatrizen $C_i$ für die n Retroreflektoren $R_i$ unterschiedlich sind;
- zu jedem der Retroreflektoren $R_i$ eine passende Rückführmatrix $H_i$ gewählt werden muss und
- die Eigenwerte des Zustandsbeobachters 2 je nach dem Betriebsmode des Laserradars einzustellen sind.

In der Phase größerer Entfernung sind die Zustandsgrößen mit geringerer Genauigkeit zu messen, der Zustandsbeobachter 2 muss schneller einschwingen können, d.h. die geschätzten Messvektoren $y^*(k)$ müssen schneller an die realen Messvektoren $y(k)$ angenähert werden. In unmittelbarer Nähe des Andockvorganges ist die Annäherungsgeschwindigkeit klein und es ist deshalb sinnvoll, den Zustandsbeobachter 2 träger zu dimensionieren, damit man durch eine wirksame Mittelwertbildung eine höhere Genauigkeit erhält.

Für die Anwendung linearer Zusammenhänge zwischen dem realen Zustandsvektor $x(k)$ des bewegten Körpers (Regelstrecke 1), auf dem sich das Laserradargerät befindet, und dem Messvektor $y(k) = (r_1' \ r_2' \ r_3')'$ wird vorausgesetzt, dass die Eulerwinkel, die die relative Lage der zwei sich annähernden Körper zueinander beschreiben, klein genug ($<10°$) sind. Andernfalls müsste der Messvektor $y(k)$ nichtlineare Funktionen in Abhängigkeit vom Zustandsvektors $x(k)$ enthalten, was prinzipiell problemlos möglich und für bestimmte Anwendungen zu berücksichtigen ist. Ausgehend von der obigen Gleichung (3) wird das Prinzip des Zustandsbeobachters 2 bei drei zeitlich nacheinander abzutastenden Retroreflektoren $R_1$, $R_2$, $R_3$ auf folgende Weise abgeändert:

$$x^*(k+\Delta) = (A_s - H_1 \ C_1) \ x^*(k) + H_1 \ y_1(k),$$
$$x^*(k+2\Delta) = (A_s - H_2 \ C_2) \ x^*(k+\Delta) + H_2 \ y_2(k+\Delta), \qquad (4)$$
$$x^*(k+1) = (A_s - H_3 \ C_3) \ x^*(k+2\Delta) + H_3 \ y_3(k+2\Delta).$$

Im einem ersten Abschnitt des Zyklustaktes, $\Delta = 1/3$, wird auf der Grundlage eines Anfangswertes $x^*(0)$ des zu schätzenden Zustandsvektors $x^*(k)$ unter Verwendung des Messergebnisses $y_1(k) = r_1$ am Retroreflektor $R_1$ ein neuer Schätzwert berechnet. Dieser resultierende geschätzte Zustandsvektor $x^*(k+\Delta)$ wird mit Hilfe der nächsten Messung $y_2(k+\Delta) = r_2$ am Retroreflektor $R_2$ verbessert, und man erhält $x^*(k+2\Delta)$. Schließlich wird im dritten und letzten Abschnitt des Zyklustaktes unter Verwendung des Messergebnisses $y_3(k+2\Delta) = r_3$ vom Retroreflektor $R_3$ ein weiterer Schätzwert $x^*(k+3\Delta)$ als neuer Zustandsvektor $x^*(k+1)$ bestimmt. Damit beginnt der nächste Zyklus der soeben beschriebenen drei Zyklusabschnitte.

Aus dem Gleichungssystem (4) geht hervor, dass

- für jeden Retroreflektor $R_1$, $R_2$, $R_3$ eine eigene Ausgangsmatrix $C_1$, $C_2$, $C_3$ gilt;
- für jede Ausgangsmatrix $C_1$, $C_2$, $C_3$ die passende Rückführmatrix $H_1$, $H_2$, $H_3$ zu bestimmen ist;
- eine Systemmatrix $A_5$ notwendig ist, die zum Taktabschnitt $\Delta = 1/3f_c$ gehört, wobei der Faktor 3 im Nenner aus der Anzahl n=3 der Retroreflektoren $R_i$ resultiert;
- das Eigenverhalten und damit die Konvergenz des Zustandsbeobachters 2 durch die Matrizen $C_1$, $C_2$, $C_3$, $H_1$, $H_2$, $H_3$ und $A_S$ bestimmt wird und
- zu jedem Messtakt der aktualisierte Schätzwert des Zustandvektors $x^*$ verfügbar ist.

Aus den oben angegebenen Gleichungen kann man eine von Fig. 3 abgeleitete Filterstruktur ermitteln, die in Fig. 4 dargestellt ist. Dabei bedeuten

- die Matrix 25 eine resultierende Systemmatrix M des Zustandsbeobachters 2, deren Eigenwerte die Stabilität und Konvergenz des simulierten Annäherungsprozesses des bewegten Körpers bestimmen, mit

$$M = [A_s(k) - H_3 \, C_3] \, [A_s(k) - H_2 \, C_2] \, [A_s(k) - H_1 \, C_1] \qquad (5)$$

und

- die Bewertungsoperatoren 251, 252 und 253 eine spezielle Wichtung für jeden der zeitlich getaktet an separaten Eingängen 211, 212 und 213 ankommenden Messvektoren $y_1$, $y_2$ und $y_3$.

Dabei enthalten die Bewertungsoperatoren 251, 252, 253

- Bewertungsmatrizen $M_i$, die die unterschiedlichen Zeitpunkte (..., k, k+$\Delta$, k+2$\Delta$, k+3$\Delta$ = k+1,...) und damit die Aktualität der Messvektoren $y_i$ berücksichtigen, mit

$$
\begin{aligned}
M_1 &= [A_s(k) - H_3 \, C_3] \, [A_s(k) - H_2 \, C_2] \, , \\
M_2 &= [A_s(k) - H_3 \, C_3] \qquad\qquad\qquad (6) \\
M_3 &= I \;, \qquad\qquad (I = \text{Einheitsmatrix}),
\end{aligned}
$$

und

- Rückführmatrizen $H_1$, $H_2$, $H_3$, die angeben, welchen Einfluss die Messvektoren $y_1$, $y_2$, $y_3$ auf die Korrektur des Zustandsvektors x* haben.

Das Schema gemäß Fig. 4 zur Realisierung dieser Filterstruktur arbeitet mit der Zyklustaktfrequenz $f_c$, die im Falle von drei Retroreflektoren der dreifachen Messtaktfrequenz $f_P$ des Laserradargerätes ($f_c = 3f_P$) entspricht. Die Filterstruktur enthält somit einstellbare Systemparameter, die angeben,

- wie mit Hilfe der Matrix 25 das Einschwingverhalten, die Dynamik, des Zustandsbeobachters 2 festgelegt werden kann und
- wie die zeitliche Aufeinanderfolge der Messvektoren $y_i$ zum Zustandsvektor x* am Ausgang 23 des Zustandsbeobachters 2 beiträgt.

Fig. 4 gibt demnach eine Lösung an, bei der zeitlich nacheinander eintreffende Messwerte (Messvektoren $y_i$) nach einer kurzen Zwischenspeichung gleichzeitig verarbeitet werden und am Ende eines Zyklus aus n Messtakten jeweils ein Folgezustandsvektor x*(k+1) ausgegeben wird.

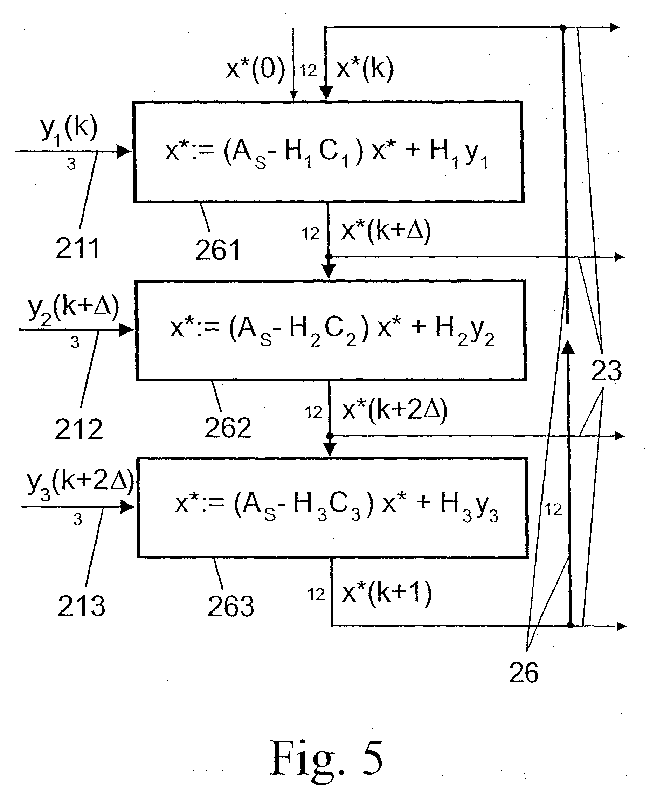

In Fig. 5 ist der Zustandsbeobachter 2 nach dem Gleichungssystem (4) in Form einer Programmschleife 26 dargestellt. Diese zeigt im Unterschied zu Fig. 4, dass nach jedem Messtakt genau ein aktualisierter Zustandsvektor x* verfügbar ist. Auch in diesem Beispiel werden drei Retroreflektoren $R_1$, $R_2$, $R_3$ verwendet. Die Bedingungen für einen linearen Zustandsbeobachter 2 (kleine Eulerwinkel) sollen erfüllt sein.
Wenn man mit dem Startwert x*(0) beginnt, berechnet man nach der Gleichung im ersten Block 261 unter Verwendung von $y_1$(k), k = 0, den ersten aktualisierten Zustandsvektor x*(k+$\Delta$), k = 0, als Ergebnis des ersten Messtaktes. Mit diesem Zustandsvektor x*(k+$\Delta$) und der Messung $y_2$(k+$\Delta$), k = 0, wird die Anweisung des zweiten Blockes 262 ausgeführt. In analoger Weise wird der dritte Block 263 bearbeitet und damit der erste Zyklus beendet. Man erhält den Schätzwert x*(k=1). Dieser Schätzwert wird als Startwert für den nächsten Zyklus verwendet, bei dem jetzt k = 1 gilt. In dieser Folge werden die weiteren Messungen [Messvektoren $y_i$(k)] zur Schätzung des jeweils nächsten Folgezustandsvektors x*(k+1) des bewegten Raumschiffes benutzt.
Die zuverlässige Funktionsweise des Verfahrens gemäß Fig. 5 hängt wesentlich von der Dimensionierung der verwendeten Matrizen ab:

- Die Systemmatrix $A_s$ beschreibt den Zusammenhang der Zustandsgrößen zwischen zwei aufeinderfolgenden Zeitpunkten, wenn keine weiteren Messvektoren $y_i$ an den Eingängen 211, 212, 213 wirken (sogenanntes autonomes System).
- Die Ausgangsmatrizen $C_1$, $C_2$, $C_3$ geben den Zusammenhang zwischen den Zustandsgrößen und den drei Komponenten des realen Zustandsvektors x(k) bzw. des berechneten Zustandsvektors x*(k) vom Koordinatenursprung des Laserradargerätes zum betreffenden Retroreflektor $R_1$, $R_2$ oder $R_3$ an.

- Die Matrizen $H_1$, $H_2$, $H_3$ sind geeignet dimensionierte Bewertungsmatrizen. Sie bestimmen, wie die Abweichung zwischen dem gemessenen y(k) und dem im Zustandsbeobachter 2 geschätzten Messvektor y*(k) zur Korrektur des geschätzten Zustandsvektors x*(k) benutzt wird.

Falls die Eulerwinkel relativ groß werden, dann sind auch in Fig. 5 die linearen Beziehungen durch Funktionen der Form

$$x^* := f_1(x^*, y_1), \; x^* := f_2(x^*, y_2), \; x^* := f_3(x^*, y_3)$$

zu ersetzen. Sie stellen Kombinationen der in der Tabelle angegebenen Teilfunktionen dar.

Nach etwa drei Zyklen, d.h. drei Durchläufen der Regelschleife 26 unter sukzessiver Einbeziehung der durch die geordnete Abtastung der Retroreflektoren $R_1$, $R_2$ und $R_3$ aufeinanderfolgend bereitgestellten Messvektoren $y_1$, $y_2$, $y_3$ kann man die Zustandsgrößen des bewegten Körpers mit für viele Fälle ausreichender Genauigkeit gewinnen. Ein weiterer Vorteil dieser Variante des erfindungsgemäßen Verfahrens besteht darin, dass aus den geschätzten Zustandsgrößen auch die ungefähre Lage des nächsten Retroreflektors $R_i$ berechnet werden kann, was eine Verbesserung des Messvorganges durch geeignete Auswahl des Gesichtsfeldes des Laserradars bedeutet.

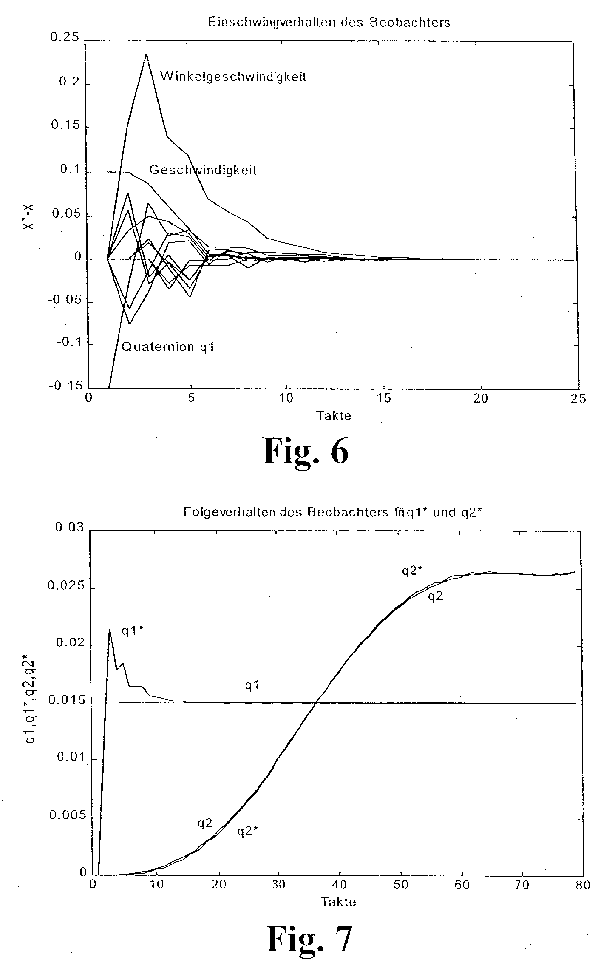

Fig. 6 zeigt für das letzte Beispiel der sukzessiven Verarbeitung der Messvektoren $y_i$ den Einschwingvorgang des Zustandsbeobachters 2. Im Startzeitpunkt der Messung haben Raumschiff und Zustandsbeobachter 2 unterschiedliche Anfangsbedingungen. Nach etwa drei Zyklen zu je drei Takten ist der Fehler der Zustandsvektoren x*(k) - x(k) nahezu Null. In diesem Beispiel wird dies besonders deutlich bei dem Quaternion $q_1$, der zugehörigen Winkelgeschwindigkeit und der translatorischen Geschwindigkeit in x-Richtung. Die übrigen Kurven stellen die Abweichungen der anderen Zustandsgrößen dar.

In Fig. 7 ist dargestellt, in welcher Weise der Zustandsbeobachter gemäß Fig. 5 den sich ändernden Zustandsgrößen des bewegten Raumschiffes folgt. Wenn sich beispielsweise das Quaternion $q_1$ (entspricht dem Rollwinkel) nahezu sprungartig ändert, dann folgt der Zustandsbeobachter in relativ kurzer Zeit mit einem Überschwingen. Gleichzeitig verändert sich das Quaternion $q_2$ (entspricht dem Nickwinkel) etwa sinusförmig, und der Zustandsbeobachter kann sehr genau folgen. Der vom Zustandsbeobachter erzeugte Schätzwert für das Quaternion $q_2^*$ ist praktisch gleich dem realen Wert $q_2$. Nahezu gleiches Verhalten zeigen ebenfalls die anderen Zustandsgrößen, wodurch die Leistungsfähigkeit der letzten Variante des erfindungsgemäßen Verfahrens eindrucksvoll nachgewiesen wird.

Ähnliche Resultate ergeben sich aber auch für die Grundvariante der Erfindung. Dies gilt ebenfalls in der Ausführung nach Fig. 4, bei der - aufgrund der Notwendigkeit einer jeweils vollständigen Serie von Retroreflektorabtastungen - das Folgeverhalten des Zustandsbeobachters lediglich ein gröberes Zeitraster bei der Ausgabe der Zustandsgrößen aufweist.

Liste der verwendeten Bezugszeichen

1      Regelstrecke (Raumschiff)
11    Übertragungsglied

2                    Zustandsbeobachter
21                  Eingang
211, 212, 213    getaktete Eingänge
22                  Übertraqunqsqlied
23                  Ausgang
24                  Operator (A - HC)
25                  Matrix M
251, 252, 253    Bewertungsoperatoren ($M_iH_i$)
26                  Regelschleife
261, 262, 263    Block

A                    Systemmatrix
B                    Eingangsmatrix
c                    Ausgangsmatrix
H                    Rückführmatrix

| | |
|---|---|
| $R_1$ | Retroreflektoren |
| $p_1$ | Positionsvektor |
| $q_1, q_2 \cdots$ | Quaternionen |
| $r_1$ | Messvektor (zum Retroreflektor $R_1$) |
| $t_1$ | Targetvektor |
| $(x_c, y_c, z_c)$ | Koordinatensystem (des bewegten Körpers) |
| $(x_T, y_T, z_T)$ | Koordinatensystem (des Targets) |
| x | realer Zustandsvektor |
| x*(k) | geschätzter(berechneter) Zustandsvektor |
| x*(k+1) | Folgezustandsvektor |
| y,/y* | realer/ geschätzter Messvektor |

**Patentansprüche**

1. Verfahren zur Bestimmung der Zustandsgrößen eines sich bewegenden starren Körpers, wie relativer Position und Lage sowie translatorischer und rotatorischer Geschwindigkeiten, insbesondere für eine Bewegung der Annäherung an einen anderen Körper unter Verwendung von durch einen aktiven Sensor bereitgestellten Messdaten, wobei die Messdaten von mindestens drei Retroreflektoren, deren Konfiguration der Anbringung am anderen Körper bekannt und einem körpereigenen Koordinatensystem des anderen Körpers definiert zugeordnet ist, erhalten werden, **dadurch gekennzeichnet**, dass

   - die Bestimmung der Zustandsgrößen des bewegten Körpers mit einem Zustandsbeobachter (2) geschieht, der die Messdaten von Abtastungen der einzelnen Retroreflektoren ($R_i$) im Raum durch ein internes Speichermodell zum gewünschten Ausgangssignal der Zustandsgrößen des bewegten Körpers verarbeitet, wobei
   - ausgehend von gesetzten Anfangswerten und in Operatoren implementierten bekannten Systemparametern ein aktueller Zustandsvektor des bewegten Körpers als Schätzung berechnet wird und
   - mittels einer durch Verknüpfung mit den Messdaten ermittelten Korrektur diese Schätzung mit jedem Messzyklus dem tatsächlichen Lage- und Bewegungsverhalten des Körpers angepasst wird, so dass nach einer bestimmten Anzahl von Mess- und Berechnungszyklen die im Zustandsbeobachter (2) berechneten Schätzwerte in sehr guter Näherung den aktuellen Bewegungsdaten des Körpers im Raum folgen und
   - die berechneten Schätzwerte als Zustandgrößen des Körpers verwendet werden.

2. Verfahren nach Anspruch 1, **dadurch gekennzeichnet**, dass die Messdaten mit den im Zustandsbeobachter (2) vorliegenden Schätzwerten verglichen werden, eine Differenz (e(k)) aus einem Messvektor (y(k)) und der aktuellen Schätzung eines Zustandsvektors ($x^*(k)$), wobei k ein Zählindex der laufenden Mess- und Berechnungstakte ist, ermittelt und zur Korrektur der Schätzwerte verwendet wird.

3. Verfahren nach Anspruch 2, **dadurch gekennzeichnet**, dass

   - aus einem aktuell geschätzten Zustandsvektor (x*(k)) mittels einer Ausgangsmatrix (C), die die Wirkung des realen Zustandsvektors (x(k)) auf den Messvektor (y(k)) beinhaltet, ein geschätzter Messvektor (y*(k)) zur Bereitstellung einer geschätzten Vergleichsgröße erzeugt wird,
   - aus dem aktuell geschätzten Zustandsvektor (x*(k)) über eine Systemmatrix (A), die Einflüsse des Systems beim Übergang von einem aktuellen Zustand auf einen nachfolgenden Zustand berücksichtigt, ein Folgezustand des Zustandsvektors (x*(k)) berechnet wird, und
   - dieser Folgezustand mittels der Differenz (e(k)) unter Verwendung einer Rückführmatrix (H), die eine Vorschrift zur Umsetzung der Differenz (e(k)) in eine Korrektur des aktuellen Zustands beinhaltet, korrigiert wird
   - und der Folgezustand aufgrund der besagten Korrektur einen Folgezustandsvektors (x*(k+1)) ergibt, der für den nächsten Takt in den aktuellen Zustandsvektor (x*(k)) übernommen wird.

4. Verfahren nach Anspruch 3, **dadurch gekennzeichnet**, dass der Zustandsbeobachter (2) als Filter aufgebaut wird, wobei

   - aus einer Verknüpfung der Ausgangsmatrix (C) und der Rückführmatrix (H) mit der Systemmatrix (A) ein Operator (24) zur Erzeugung eines Folgezustands, der den Zusammenhang zwischen zwei aufeinanderfolgenden geschätzten Zustandsvektoren (x*(k); x*(k+1)) ohne Kenntnis des geschätzten Messvektors y*(k) und unabhängig vom aktuellen Messvektor (y(k)) beschreibt, erzeugt wird,

- aus dem aktuellen geschätzten Zustandsvektor (x*(k)) dessen Folgezustand mittels des Operators (24) berechnet wird und

- der erzeugte Folgezustand des Zustandsvektors (x*(k)) mit dem über die Rückführmatrix (H) umgewandelten Messvektor (y(k)) korrigiert und in den Folgezustandsvektor (x*(k+1)) überführt wird und

- der Folgezustandsvektor (x*(k+1)) parallel zum noch vorhandenen aktuellen Zustandsvektor (x*(k)) wahlweise als Ausgang (23) des Zustandsbeobachters (2) bereitgestellt wird.

5. Verfahren nach einem der Ansprüche 1 bis 4, **dadurch gekennzeichnet**, dass die Messdaten von mehreren zeitgleich abgetasteten Retroreflektoren ($R_i$), die in einem Messvektor (y) zusammengefasst sind, im Zustandsbeobachter (2) gleichzeitig mit der Messtaktfrequenz ($f_P$) der Abtastung verarbeitet werden, wobei ein Zyklustakt der Berechnungen im Zustandsbeobachter (2) dem Messtakt der Abtastung der Retroreflektoren ($R_i$) entspricht.

6. Verfahren nach einem der Ansprüche 1 bis 4, **dadurch gekennzeichnet**, dass die Messdaten von mehreren nacheinander abgetasteten Retroreflektoren ($R_i$) in Form von Messvektoren ($y_i$) im Zustandsbeobachter (2) mit einer Zyklustaktfrequenz ($f_C$), deren Periode der Dauer einer Serie von Abtastungen aller Retroreflektoren ($R_i$) mit einer Messtaktfrequenz ($f_P$) entspricht, verarbeitet werden, wobei für n Retroreflektoren $f_P = n\ f_C$ gilt.

7. Verfahren nach Anspruch 6, **dadurch gekennzeichnet**, dass die Messvektoren ($y_i$) von aufeinanderfolgend abgetasteten Retroreflektoren ($R_i$) im Zustandsbeobachter zwischengespeichert, in Abhängigkeit ihrer zeitlichen Reihenfolge gewichtet und nach Abschluss einer Serie von Abtastungen aller Retroreflektoren ($R_i$) in einem Zyklustakt gleichzeitig verarbeitet werden.

8. Verfahren nach Anspruch 7, **dadurch gekennzeichnet**, dass

- die zeitlich nacheinander einlaufenden Messvektoren ($y_i$) in einem als Filter aufgebauten Zustandsbeobachter (2) zwischengespeichert werden,

- in Abhängigkeit vom Messzeitpunkt unterschiedlich bewertet werden durch jeweils eine zugehörige Rückführmatrix ($H_i$) und eine Bewertungsmatrix ($M_i$), die eine vom Alter der Messvektoren ($y_i$) zeitabhängige Vergessensrate berücksichtigt, und

- der aktuelle Zustandsvektor (x*(k)), der mit der Matrix (25), die das Gedächtnis über n Messtakte verkörpert, multipliziert wird, mit den speziell bewerteten und anschließend zusammengefassten Messvektoren ($y_i$) korrigiert wird.

9. Verfahren nach einem der Ansprüche 1 oder 4, **dadurch gekennzeichnet**, dass die Messdaten von aufeinanderfolgend abgetasteten Retroreflektoren ($R_i$) in Form von Messvektoren ($y_i$) im Zustandsbeobachter (2) mit einer Messtaktfrequenz ($f_P$ ), die der mittleren Dauer der Abtastungen jedes der Retroreflektoren ($R_i$) entspricht, unter kurzzeitiger Zwischenspeicherung in Quasi-Echtzeit verarbeitet werden.

10. Verfahren nach Anspruch 9, **dadurch gekennzeichnet**, dass jeder der Messvektoren ($y_i$), die in einer definierten Reihenfolge der abgetasteten Retroreflektoren ($R_i$) aufgenommen werden, ohne Verzug im Zustandsbeobachter (2) verarbeitet werden, wobei jeweils

- der einzelne Messvektor ($y_i(k)$) bewertet wird mit einer Rückführmatrix ($H_i$), die zu einer für jeden Retroreflektor ($R_i$) spezifischen Ausgangsmatrix ($C_i$) zugehörig angepasst ist, und

- aus dem bewerteten Messvektor ($y_i(k)$) und dem vorliegenden aktuellen Zustandsvektor (x*(k)), der mit einer das Gedächtnis über einen Messtakt repräsentierenden Matrix ($A_S - H_i\ C_i$) multipliziert wird, ein Folgezustand berechnet wird, der sogleich Ausgangszustand für die Verarbeitung des nächsten Messvektors ($y_{i+1}(k+i\Delta)$) vom nachfolgend abgetasteten Retroreflektor ($R_{i+1}$) ist.

Fig. 1

Fig. 3

Fig. 4

Fig. 2

$$x^*(0) \quad \downarrow 12 \quad x^*(k)$$

$$y_1(k) \atop 3 \quad x^* := (A_S - H_1 C_1) \, x^* + H_1 y_1$$

211     261     $12 \quad x^*(k+\Delta)$

$$y_2(k+\Delta) \atop 3 \quad x^* := (A_S - H_2 C_2) \, x^* + H_2 y_2$$

212     262     $12 \quad x^*(k+2\Delta)$

$$y_3(k+2\Delta) \atop 3 \quad x^* := (A_S - H_3 C_3) \, x^* + H_3 y_3$$

213     263     $12 \quad x^*(k+1)$

12

23

26

# Fig. 5

Einschwingverhalten des Beobachters

**Fig. 6**

Folgeverhalten des Beobachters füq1* und q2*

**Fig. 7**

**Europäisches Patentamt**

# EUROPÄISCHER RECHERCHENBERICHT

Nummer der Anmeldung

EP 01 10 4452

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | US 5 109 345 A (NASA)<br>28. April 1992 (1992-04-28)<br>* Ansprüche 1,6; Abbildung 1 *<br>--- | 1 | B64G1/64<br>G01B21/24<br>G01S5/16<br>B25J18/00 |
| A | US 5 020 876 A (NASA)<br>4. Juni 1991 (1991-06-04)<br>* Spalte 3, Zeile 19 - Zeile 21; Abbildung 4 *<br>--- | 1 | |
| A | US 4 834 531 A (ENERGY OPTICS)<br>30. Mai 1989 (1989-05-30)<br>* Spalte 4, Zeile 56 - Zeile 59 *<br>* Spalte 16, Zeile 28 - Zeile 42; Abbildungen 1,2 *<br>--- | 1 | |
| A | US 5 436 841 A (ASNI)<br>25. Juli 1995 (1995-07-25)<br>* Spalte 8, Zeile 48 - Zeile 63 *<br>--- | | |
| A | DE 195 15 176 A (TRW)<br>21. Dezember 1995 (1995-12-21)<br>* Anspruch 1 *<br>--- | | **RECHERCHIERTE SACHGEBIETE (Int.Cl.7)** |
| A | US 4 521 855 A (FORD ACC)<br>4. Juni 1985 (1985-06-04)<br>* Ansprüche 1,3 *<br>----- | | B64G<br>G01B<br>G01S<br>B25J |

Der vorliegende Recherchenbericht wurde für alle Patentansprüche erstellt

| Recherchenort | Abschlußdatum der Recherche | Prüfer |
|---|---|---|
| MÜNCHEN | 5. Juni 2001 | Mielke, W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 01 10 4452

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-06-2001

| Im Recherchenbericht angeführtes Patentdokument | Datum der Veröffentlichung | Mitglied(er) der Patentfamilie | Datum der Veröffentlichung |
|---|---|---|---|
| US 5109345 A | 28-04-1992 | KEINE | |
| US 5020876 A | 04-06-1991 | KEINE | |
| US 4834531 A | 30-05-1989 | EP 0256023 A<br>WO 8702797 A | 24-02-1988<br>07-05-1987 |
| US 5436841 A | 25-07-1995 | FR 2688613 A<br>CA 2091613 A<br>DE 69302207 D<br>DE 69302207 T<br>EP 0561660 A<br>JP 6016196 A<br>RU 2103202 C | 17-09-1993<br>17-09-1993<br>23-05-1996<br>14-08-1996<br>22-09-1993<br>25-01-1994<br>27-01-1998 |
| DE 19515176 A | 21-12-1995 | US 5734736 A<br>JP 8230798 A | 31-03-1998<br>10-09-1996 |
| US 4521855 A | 04-06-1985 | CA 1191579 A<br>DE 3278200 D<br>EP 0071445 A<br>JP 1655002 C<br>JP 3019120 B<br>JP 58026700 A | 06-08-1985<br>14-04-1988<br>09-02-1983<br>13-04-1992<br>14-03-1991<br>17-02-1983 |

EPO FORM P0461

Für nähere Einzelheiten zu diesem Anhang : siehe Amtsblatt des Europäischen Patentamts, Nr.12/82